# EUROPÄISCHE PATENTSCHRIFT

(11) **EP 3 861 324 B1**
(45) Veröffentlichungstag und Bekanntmachung des Hinweises auf die Patenterteilung: **10.08.2022**
(21) Anmeldenummer: 19782550.8
(22) Anmeldetag: 30.09.2019
(51) Int. Cl.: G01N 21/55, F24S 23/70, F24S 50/20

(54) **VERFAHREN ZUR BESTIMMUNG VON RELATIVEN REFLEXIONSGRADEN EINER MESSFLÄCHE**
METHOD FOR DETERMINING RELATIVE DEGREES OF REFLECTANCE OF A MEASUREMENT SURFACE
PROCÉDÉ DE DÉTERMINATION DE DEGRÉS RELATIFS DE RÉFLEXION D'UNE SURFACE DE MESURE

(30) Priorität: 02.10.2018 DE 102018124368
(43) Veröffentlichungstag der Anmeldung: 11.08.2021
(73) Patentinhaber: Fraunhofer-Gesellschaft zur Förderung der angewandten Forschung e.V., 80686 München (DE)
(72) Erfinder: BERN, Gregor, 79110 Freiburg (DE); SCHÖTTL, Peter, 79110 Freiburg (DE); HEIMSATH, Anna, 79110 Freiburg (DE); NITZ, Peter, 79110 Freiburg (DE)
(74) Vertreter: LBP Lemcke, Brommer & Partner Patentanwälte mbB
(86) Internationale Anmeldenummer: PCT/EP2019/076475
(87) Internationale Veröffentlichungsnummer: WO 2020/070076

(56) Entgegenhaltungen:
- DE-A1-102016 226 033

## Beschreibung

Die Erfindung betrifft ein Verfahren zur Bestimmung von relativen Reflexionsgraden einer Messfläche gemäß Anspruch 1.

Für eine Vielzahl von Anwendungen ist es wünschenswert, ortsaufgelöst Reflexionsgrade einer Messfläche zu bestimmen. Anwendungsbeispiele finden sich in der Architektur, um die Reflexion von Außenfassaden zu messen, insbesondere die Reflexion von Sonneneinstrahlung. Ebenso ist die Vermessung von Reflexionsgraden in Innenräumen, insbesondere von Wänden und weiteren großflächigen architektonischen Objekten im Innenbereich wünschenswert. Darüber hinaus finden sich Anwendungen im wissenschaftlichen Bereich zur Vermessung von Reflexionsgraden flächiger Proben. Dies umfasst statische Proben sowie dynamische Proben beispielsweise bei Pflanzen oder anderen biologischen Objekten.

Weiterhin ist die Bestimmung von Reflexionsgraden bei Strahlungsempfängern in solarthermischen Turmkraftwerken notwendig: Es ist bekannt, zur Nutzung von Sonnenenergie Sonnenstrahlung mittels mehrfacher Reflektoren auf einen Strahlungsempfänger zu konzentrieren. Bei solarthermischen Turmkraftwerken wird einfallende Sonnenstrahlung mittels als Heliostaten ausgebildeten Reflektoren auf einen Strahlungsempfänger konzentriert. Zur Bestimmung der Güte des Strahlungsempfängers, zur Detektion von Defekten des Strahlungsempfängers im laufenden Betrieb sowie zur Optimierung der Nutzung des Sonnenlichts ist eine ortsaufgelöste Messung von Reflexionsgraden einer Absorberfläche des Strahlungsempfängers wünschenswert: Aus DE 10 2016 119 000 A1 ist ein solarthermisches Turmkraftwerk und ein Kalibrierungsverfahren zur Ausrichtung der Heliostaten des Turmkraftwerks bekannt. Aus DE 10 2016 226 033 A1 ist ein Verfahren zur Bestimmung von relativen Reflexionsgraden einer Absorberfläche eines Strahlungsempfängers einer solarthermischen Turmanlage bekannt. Hierbei wird mittels eines Heliostaten ein Lichtfleck über den Strahlungsempfänger bewegt. Während dieser Bewegung werden mittels einer Kamera eine Mehrzahl von ortsaufgelösten Bildern aufgenommen. Die Absorberfläche des Strahlungsempfängers wird in mehrere Segmente aufgeteilt und für jedes Segment wird basierend auf den Bildern der Kamera ein maximaler Grauwert bestimmt. Abhängig von den maximalen Grauwerten wird jedem Segment ein relativer Reflexionsgrad zugeordnet.

Der vorliegenden Erfindung liegt die Aufgabe zugrunde, eine gegenüber dem Stand der Technik schnellere Bestimmung von relativen Reflexionsgraden oder Bestimmung mit einer höheren Ortsauflösung zu ermöglichen.

Gelöst ist diese Aufgabe durch ein Verfahren zur Bestimmung von relativen Reflexiongraden einer Messfläche gemäß Anspruch 1. Vorteilhafte Ausgestaltungen finden sich in den abhängigen Ansprüchen.

Das erfindungsgemäße Verfahren zur Bestimmung von relativen Reflexionsgraden einer Messfläche weist folgende Verfahrensschritte auf:
In einem Verfahrensschritt A erfolgt ein Beaufschlagen der Messfläche mit Messstrahlung, so dass ein Messfleck auf der Messfläche entsteht. In einem Verfahrensschritt B erfolgt ein Bewegen des Messflecks entlang zumindest einer ersten geradlinigen Messfleck-Bahn gemäß einer ersten Bahnbewegung. In einem Verfahrensschritt C erfolgt ein Aufnehmen einer ersten Bildmenge einer Mehrzahl von ortsaufgelösten Bildern der Messfläche während der ersten Bahnbewegung gemäß Schritt B und in einem Verfahrensschritt D erfolgt ein Bestimmen von relativen Reflexionsgraden für eine Mehrzahl von Ortspunkten der Messfläche.

Wie in den zuvor beschriebenen, aus dem Stand der Technik bekannten Verfahren wird somit ein Messfleck über die Messfläche bewegt und während dieser Bahnbewegung werden mehrere ortsaufgelöste Bilder der Messfläche aufgenommen.

Wesentlich ist, dass bei dem erfindungsgemäßen Verfahren in Verfahrensschritt B der Messfleck zusätzlich zumindest entlang einer zweiten geradlinigen Messfleck-Bahn, welche nicht parallel zu der ersten Messfleckbahn ist, in einer zweiten Bahnbewegung bewegt wird, derart, dass ein erster Messbahnbereich der Messfläche, welcher bei der ersten Bahnbewegung durch den Messfleck überstrichen wird mit einem zweiten Messbahnbereich der Messfläche, welcher bei der zweiten Bahnbewegung durch den Messfleck überstrichen wird, zumindest überlappt.

In Verfahrensschritt C erfolgt ein Aufnehmen einer zweiten Bildmenge einer Mehrzahl von ortsaufgelösten Bildern der Messfläche während der zweiten Bahnbewegung gemäß Schritt B.

In Verfahrensschritt D erfolgt eine Auswertung an Schnittpunkten. Die Ortspunkte der Schnittpunkte auf der Messfläche sind durch Auswertelinien definiert, wobei eine erste Gruppe von geradlinigen Auswertelinien innerhalb des ersten Messbahnbereichs und zumindest eine zweite Gruppe von geradlinigen Auswertelinien innerhalb des zweiten Messbahnbereichs vorgegeben und/oder bestimmt werden. Zumindest die erste Gruppe weist zumindest zwei Auswertelinien auf, die beabstandet zueinander sind. Die Auswertelinien der ersten Gruppe sind parallel zu der ersten Messfleck-Bahn und die Auswertelinie oder die Auswertelinien der zweiten Gruppe sind parallel zu der zweiten Messfleck-Bahn. Bevorzugt weist auch die zweite Gruppe zumindest zwei Auswertelinien auf.

Jede Auswertelinie der ersten Gruppe weist einen Schnittpunkt mit zumindest einer Auswertelinie der zweiten Gruppe auf, bevorzugt mit jeder Auswertelinie der zweiten Gruppe.

Für jede Bildmenge wird zumindest für jeden Schnittpunkt ein maximaler Grauwert bestimmt. In Verfahrensschritt D werden relative Reflexionsgrade der Messfläche zumindest an einer Teilmenge der Schnittpunkte abhängig von diesen maximalen Grauwerten bestimmt.

Das erfindungsgemäße Verfahren verwendet somit maximale Grauwerte an Schnittpunkten der zuvor beschriebenen Auswertelinien, um relative Reflexionsgrade zumindest an den Orten der Schnittpunkte zu bestimmen. Hierdurch kann eine höhere Messpunktdichte durch entsprechende Wahl der Auswertelinien erzielt werden, so dass ein gegenüber dem Stand der Technik schnelleres Verfahren oder eine Bestimmung von relativen Reflexionsgraden mit höherer Ortsauflösung ermöglicht wird. Weiterhin sind geringere Anforderungen an das Intensitätsprofil gegeben, insbesondere kann auch ein Messfleck mit mehreren lokalen Maxima verwendet werden.

Vorzugsweise sind die Orte der Schnittpunkte auf der Messfläche vorgegeben. Hierdurch sind auch die Auswertelinien bekannt und eine Auswertung kann in unaufwändiger Weise erfolgen. Bevorzugt sind zusätzlich auch die erste und die zweite Messfleck-Bahn auf der Messfläche vorgegeben. Durch eine kalibrierte Ansteuerung desjenigen Elementes, welches zur Bewegung des Messflecks verwendet wird, kann in dieser vorteilhaften Ausführungsform somit in einfacher Weise das Verfahren durchgeführt werden.

In einer weiteren vorteilhaften Ausführungsform wird der Verlauf zumindest einer Bahnbewegung, bevorzugt beider Bahnbewegungen aus den ortsaufgelösten Bildern bestimmt. Hierdurch ergibt sich der Vorteil, dass die jeweilige Messfleck-Bahn nicht oder jedenfalls nicht exakt vorbekannt sein muss und insbesondere auch Ungenauigkeiten und Fehler einer Kalibrierung sich nicht auf das Ergebnis der Bestimmung der relativen Reflexionsgrade auswirken. Insbesondere ist es vorteilhaft, dass der Verlauf der Auswertelinien relativ zu dem Verlauf der Bahnbewegung vorgegeben wird. Hierdurch kann durch einfache Angaben, wie beispielsweise Angabe eines Abstandes einer oder mehrerer parallel zur Messfleck-Bahn verlaufender Auswertelinien die notwendige Information zur Durchführung des Verfahrens vorgegeben werden.

Jeder Punkt einer Auswertelinie wird mit dem lokalen Maximum der Intensitätsverteilung des Messflecks, welches durch die Auswertelinie geschnitten wird, an zumindest einem Zeitpunkt beaufschlagt. Entlang der Bewegungsrichtung bewegen sich alle lokalen Maxima in gleicher Geschwindigkeit und bilden die Front der lokalen Maxima aller parallel zur Bewegungsrichtung angeordneter Schnitte durch die Intensitätsverteilung des Messflecks. Die Front der lokalen Maxima gibt für Auswertelinien parallel zur Bewegungsrichtung für jede Auswertelinie jeweils das globale Maximum wieder. Wenn die Front der lokalen Maxima einen Ortspunkt auf einer Auswertelinie (beispielsweise einen Schnittpunkt) durchläuft, so liegt zu diesem Zeitpunkt für diesen Ortspunkt der maximale Grauwert vor.

Bevorzugt wird zumindest eine Messfleck-Bahn, insbesondere bevorzugt werden beide Messfleck-Bahnen aus den zugeordneten Bildmengen bestimmt, insbesondere wie nachfolgend beschrieben: Zur Bestimmung der Messfleck-Bahn wird für jeden Ortspunkt der Zeitpunkt bestimmt, bei welchem der maximale Grauwert über den Zeitraum der Aufnahme auftritt. Der Zeitpunkt wird bevorzugt über den Index der Aufnahme, welcher proportional zur tatsächlichen Zeit verläuft, definiert. Entlang der Bewegungsrichtung werden im Wert ansteigende Zeitpunkte bestimmt, entsprechend der zeitlichen Abfolge der Beaufschlagung mit der Front der lokalen Maxima. Diese Wertegrundlage entspricht dem Eingangsparameter für die von Bradski und Davis (G. R. Bradski and J. W. Davis, "Motion segmentation and pose recognition with motion history gradients," Machine Vision and Applications 13 (3), 174-184 (2002)) vorgestellte Methode zur Unterscheidung von Bewegungen und Bestimmung von Bewegungsrichtungen. Anhand der zeitlichen Gradienten wird somit die Bewegungsrichtung der Messfleckbahn bestimmt.

Vorteilhafterweise weist jede Gruppe von Auswertelinien zumindest fünf, insbesondere zumindest zehn, bevorzugt zumindest fünfzig Auswertelinien auf. Ein besonderer Vorteil des erfindungsgemäßen Verfahrens liegt darin, dass mit geringem Aufwand eine hohe Informationsdichte hinsichtlich der relativen Reflexionsgrade erzielt werden kann. Anzahl und Abstand der Auswertelinien zueinander bzw. zu der zugeordneten Messfleck-Bahn können hierbei an die jeweilige Messsituation und die Größe des Messflecks angepasst werden. Je mehr Auswertelinien vorgegeben werden, desto mehr Schnittpunkte ergeben sich, welche die Grundlage zur Bestimmung der relativen Reflexionsgrade darstellen.

Das erfindungsgemäße Verfahren bietet über die Bestimmung von relativen Reflexionsgraden an den Schnittpunkten hinaus jedoch auch die Möglichkeit, den relativen Reflexionsgrad kontinuierlich entlang zumindest einer, bevorzugt aller Auswertelinien anzugeben. Dies wird dadurch ermöglicht, dass basierend auf den sich an den Schnittpunkten schneidenden Auswertelinien ein Gleichungssystem aufgestellt werden kann, welches die Angabe des relativen Reflexionsgrads entlang jeder Auswertelinie ermöglicht.

Zur Vereinfachung der Auswertung werden die Bilder jeder Bildmenge vorteilhafterweise jeweils von einem identischen Aufnahmeort aus aufgenommen. Insbesondere ist es zur Vereinfachung vorteilhaft, dass der Aufnahmeort der Bilder der ersten Bildmenge und der zweiten Bildmenge identisch ist.

Die Bilder der ersten Bildmenge und der zweiten Bildmenge werden bevorzugt mittels einer Kamera aufgenommen, insbesondere bevorzugt mittels einer ortsaufgelösten elektronischen Kamera. Vorteilhafterweise erfolgt vor Aufnahme der Bilder eine Bildsensorkalibrierung eines Bildsensors der Kamera, insbesondere eine Dunkelbildkorrektur und/oder eine Weißbildkorrektur und/oder eine Linearisierung. Hierdurch wird die Auswertung der Messdaten der Kamera vereinfacht.

Das erfindungsgemäße Verfahren weist den erheblichen Vorteil auf, dass eine Auswertung von relativen Reflexionsgraden auch in solchen Bereichen möglich ist, welche nicht durch das absolute Intensitätsmaximum eines Messflecks überstrichen werden. Auch andere Intensitätsverteilungen eines Messflecks, beispielsweise eine gaußsche Verteilung, eine konstante Verteilung der Intensität oder auch eine unregelmäßige, uneinheitliche Intensitätsverteilung innerhalb der Fläche des Messflecks stehen einer Anwendung des erfindungsgemäßen Verfahrens nicht entgegen. Hierdurch ergibt sich der Vorteil, dass nur geringe Einschränkungen hinsichtlich der Auswahl der Lichtquelle zum Erzeugen des Messflecks bestehen.

In einer vorteilhaften Ausführungsform wird ein Reflektor als Quelle zum Beaufschlagen der Messfläche mit Messstrahlung verwendet, insbesondere ein relativ zu der Messfläche drehbarer, bevorzugt um mehrere Achsen drehbarer Reflektor. Die Messstrahlung wird in diesem Fall somit von zumindest einer, bevorzugt genau einer Lichtquelle erzeugt und mittels des Reflektors wird der Messfleck über die Messfläche bewegt. Dies ist insbesondere vorteilhaft, wenn das erfindungsgemäße Verfahren zur Bestimmung von Reflexionsgraden eines Absorberfeldes eines solarthermischen Turmkraftwerkes verwendet wird, da hier in einfacher Weise einer der bereits vorhandenen Heliostaten als Reflektor verwendet werden kann.

Es liegt somit insbesondere im Rahmen der Erfindung, die Sonne als Lichtquelle zum Erzeugen der Messstrahlung zu verwenden.

Ebenso liegt es im Rahmen der Erfindung, einen Profilstrahler als Quelle für die Messstrahlung zu verwenden. Insbesondere können bevorzugt Profilstrahler eingesetzt werden, welche zumindest senkrecht zu der Messfleck-Bahn eine möglichst große Ausdehnung mit hoher Intensität besitzen, so dass ein großer Bereich bei Bewegen des Messflecks entlang der Messfleck-Bahn überstrichen wird.

Bevorzugt wird ein Laser als Quelle für die Messstrahlung verwendet, insbesondere wird bevorzugt ein mittels des Lasers erzeugter Laserstrahl mittels eines optischen Aufweitungselementes aufgeweitet, insbesondere zu einem Linienprofil aufgeweitet. In dieser vorteilhaften Ausführungsform erfolgt weiterhin bevorzugt die Bewegung des Messflecks quer zur Längserstreckung des Linienprofils, so dass, wie zuvor beschrieben, bei Bewegen des Messflecks eine große Fläche überstrichen wird.

In einer weiteren bevorzugten Ausführungsform wird eine Lichtquelle zum Erzeugen der Messstrahlung relativ zu der Messfläche bewegt, um den Messfleck entlang der Messfleck-Bahn zu bewegen. Dies ist insbesondere bei Anwendungen vorteilhaft, bei welchen in unaufwendiger Weise eine Messquelle mit fokussiertem Messstrahl zum Erzeugen eines Messflecks entlang der Messfläche bewegt werden kann.

In einer weiteren vorteilhaften Ausführungsform werden die Verfahrensschritte A bis D für zumindest zwei unterschiedliche Aufnahmeorte durchgeführt und in einer Gesamtauswertung werden winkelabhängige relative Reflexionsgrade für zumindest eine Teilmenge der Schnittpunkte bestimmt. Durch die unterschiedlichen Aufnahmeorte wird somit nicht nur eine ortsaufgelöste Information der Verteilung des relativen Reflexionsgrades der Messfläche gewonnen, sondern darüber hinaus auch noch eine Abhängigkeit hinsichtlich des Reflexionswinkels bestimmt. Hierzu ist es insbesondere vorteilhaft, für eine Vielzahl von Aufnahmeorten jeweils die Verfahrensschritte A bis D durchzuführen.

Das erfindungsgemäße Verfahren ist insbesondere zur Bestimmung von relativen Reflexionsgraden von großen Flächen geeignet, wie beispielsweise die vorgenannte Absorberfläche eines solarthermischen Turmkraftwerkes oder Außenfassaden eines Gebäudes. Ebenso kann das erfindungsgemäße Verfahren in kleineren Maßstäben, insbesondere im Labormaßstab angewandt werden, beispielsweise zur Bestimmung von relativen Reflexionsgraden von synthetisch hergestellten Oberflächen oder biologischen Oberflächen.

Weitere bevorzugte Merkmale und Ausführungsformen werden im Folgenden anhand der Figuren und von Ausführungsbeispielen erläutert. Dabei zeigt:
- Figur 1: eine schematische Darstellung eines solarthermischen Turmkraftwerks, bei welchem relative Reflexionsgrade einer Absorberfläche des Solarturms mittels eines Ausführungsbeispiels des erfindungsgemäßen Verfahrens bestimmt werden;
- Figuren 2 bis 4: schematische Darstellungen zur Erläuterung eines Ausführungsbeispiels des erfindungsgemäßen Verfahrens.

Die Figuren zeigen schematische, nicht maßstabsgetreue Darstellungen. Gleiche Bezugszeichen in den Figuren bezeichnen gleiche oder gleichwirkende Elemente.

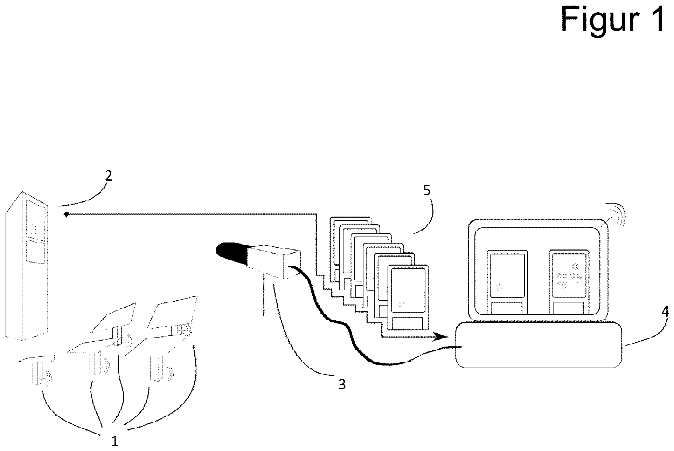

Figur 1 zeigt eine schematische Darstellung eines solarthermischen Turmkraftwerks. Eine Gruppe von als Heliostaten ausgebildeten Reflektoren 1 ist mittels motorischer Mittel zweiachsig schwenkbar auf Pylonen gelagert. Das Turmkraftwerk weist weiterhin einen Strahlungsempfänger 2 auf, welcher auf einem Turm angeordnet ist und eine rechteckige Strahlungs-Apertur aufweist. Der Strahlungsempfänger weist innerhalb der rechteckigen Strahlungsapertur einen die Strahlungsapertur vollständig ausfüllenden Absorber auf, dessen Absorberfläche thermisch leitend mit Leitungen für ein Wärmetransportfluid verbunden ist.

Mittels des Wärmetransportfluids wird die durch Konzentration von Sonnenlicht mittels der Reflektoren 1 auf dem Strahlungsempfänger 2 erzielte Wärme zur weiteren Verwendung abgeleitet, vorliegend in einen energetischen Kreisprozess zur Stromgewinnung.

Das Turmkraftwerk weist weiterhin eine ortsfest angeordnete Kamera 3 auf, welche auf den Strahlungsempfänger ausgerichtet ist, um ortsaufgelöste Bilder des Strahlungsempfängers aufzunehmen und mit einer Auswerteeinheit 4 (vorliegend eine Rechnereinheit mit Prozessor, Datenspeicher, Programmspeicher, Eingabegeräten wie Tastatur und Maus sowie Ausgabegeräten wie Bildschirm und Lautsprecher) verbunden ist.

Die Auswerteeinheit 4 ist hierzu über ein Datenkabel mit der Kamera 3 verbunden, um einerseits die Aufnahmen der Kamera 3 zu steuern und andererseits die Messbilder der Kamera 3 zu empfangen. Darüber hinaus ist die Auswerteeinheit 4 über Funk mit den motorischen Mitteln zur Positionierung der Reflektoren 1 verbunden.

Zum Betrieb des Solarkraftwerks ist die Auswerteeinheit 4 ausgebildet, einerseits als Nachführungseinheit die Reflektoren 1 einem sich ändernden Sonnenstand nachzuführen, so dass stets und unabhängig vom Sonnenstand eine Konzentration des Sonnenlichts auf den Strahlungsempfänger 2 erfolgt. Andererseits ist die Auswerteeinheit 4 ausgebildet, nachfolgend beschriebenes Ausführungsbeispiel eines erfindungsgemäßen Verfahrens zur ortsaufgelösten Bestimmung von relativen Reflexionsgraden des Absorbers des Strahlungsempfängers 2 durchzuführen:
In einem Ausführungsbeispiel des erfindungsgemäßen Verfahrens wird ein Reflektor 1 mittels der Auswerteeinheit 4 derart gesteuert, dass das reflektierte Sonnenlicht entlang einer geradlinigen, waagerechten Bahn die Absorberfläche, welche vorliegend die Messfläche darstellt, überstreicht. Die verbleibenden Reflektoren 1 sind derart ausgerichtet, dass kein Sonnenlicht auf die Messfläche reflektiert wird.

Das mittels des Reflektors 1 auf die Messfläche reflektierte Licht stellt somit den Messfleck dar und die zuvor beschriebene geradlinige waagerechte Bewegung die erste Messfleck-Bahn.

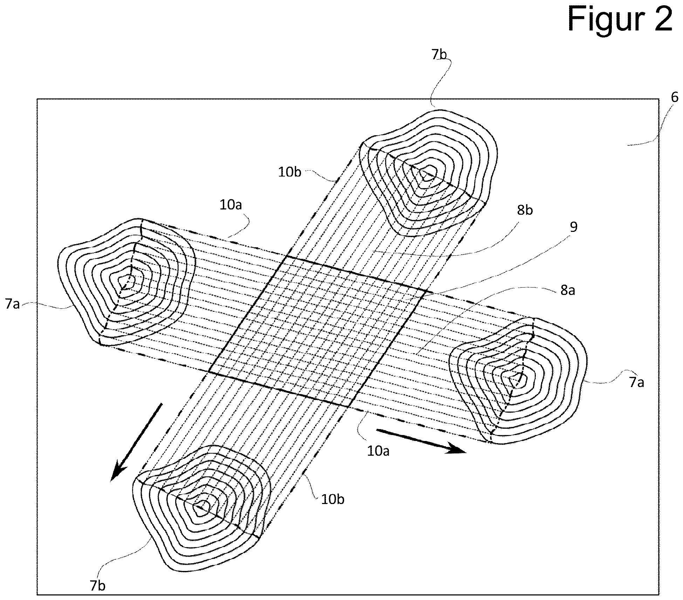

Anschließend wird zusätzlich mittels des Reflektors 1 der Messfleck entlang einer vertikalen geradlinigen Bewegung über die Messfläche geführt, so dass diese zweite geradlinige Messfleck-Bahn die erste Messfleck-Bahn schneidet. Dies ist in Figur 2 schematisch dargestellt:
Der Messfleck 7a wird entlang der ersten Messfleck-Bahn 8a bewegt. Der Messfleck 7a ist am Start- und Endpunkt der ersten Messfleck-Bahn 8a dargestellt. Anschließend wird der Messfleck entlang der zweiten Messfleck-Bahn 8b bewegt. Auch hier ist der Messfleck 7b am Start- und Endpunkt der zweiten Messfleck-Bahn 8b dargestellt. Die Pfeile geben die jeweilige Bewegungsrichtung an. Erste und zweite Messfleck-Bahn überlappen, so dass in einem Überschneidungsfeld 9 die Messfläche 6 sowohl von Messfleck 7a, als auch von Messfleck 7b überstrichen wird.

Während der ersten Bahnbewegung, bei welcher der Messfleck 7a entlang der ersten Messfleck-Bahn 8a bewegt wird, wird mittels der Kamera 3 eine erste Bildmenge 5 ortsaufgelöster Bilder aufgenommen. Diese sind in Figur 1 schematisch dargestellt. Die Bilder der ersten Bildmenge werden vorliegend mit einer Frequenz von 40 Hz aufgenommen.

Ebenso wird bei der zweiten Bahnbewegung, bei welcher der Messfleck 7b entlang der zweiten Messfleck-Bahn 8b bewegt wird, eine zweite Bildmenge ortsaufgelöster Bilder mit gleicher Frequenz aufgenommen.

Die Bewegungsrichtungen und Start- und Endpunkte von erster und zweiter Messfleck-Bahn sind bei dem vorliegenden Ausführungsbeispiel in der Auswerteeinheit 4 gespeichert und werden an die motorischen Mittel des Heliostaten 1 weitergeleitet, so dass eine entsprechende Drehbewegung durch den Heliostaten 1 ausgeführt wird.

Die erste und zweite Bildmenge ortsaufgelöster Bilder stellen die Messdaten dar, aufgrund derer relative Reflexionsgrade wie folgt bestimmt werden:
Die Bestimmung erfolgt anhand von Schnittpunkten von Auswertelinien, welche parallel beidseitig der Messfleck-Bahnen äquidistant angeordnet sind: Diese Linien sind in Figur 2 gestrichelt dargestellt. Exemplarisch sind die beiden äußeren Auswertelinien 10a der ersten Gruppe von Auswertelinien und die beiden äußeren Auswertelinien 10b der zweiten Gruppe von Auswertelinien gekennzeichnet. Diese äußeren Auswertelinien liegen jeweils auf der Grenze des zugehörigen Messbahnbereichs. Vorliegend weisen die Auswertelinien jeweils einen Abstand von 7 mm zueinander auf. Der Messfleck überdeckt vorliegend eine Fläche von etwa 5 m.

Im Überschneidungsfeld 9 überkreuzen sich die Auswertelinien, so dass jede Auswertelinie der ersten Gruppe einen Schnittpunkt mit jeder Auswertelinie der zweiten Gruppe aufweist.

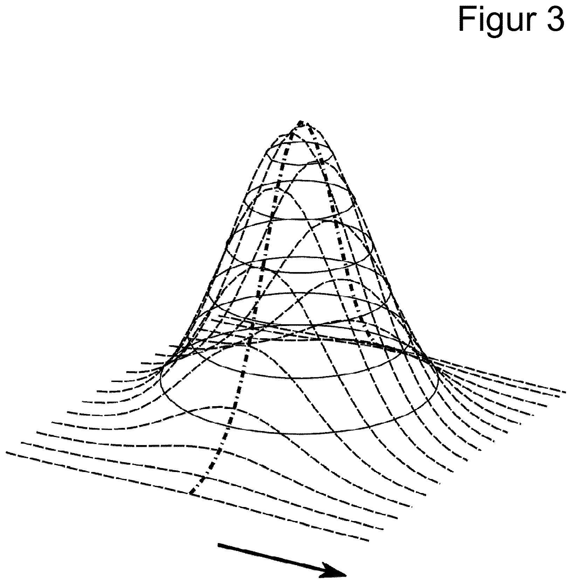

Der Messfleck weist typischerweise eine inhomogene Intensitätsverteilung auf. In Figur 3 ist eine idealisierte Intensitätsverteilung eines Messflecks mit einem zentralen Intensitätsmaximum perspektivisch dargestellt. Die gestrichelten Linien stellen Auswertelinien entlang der durch den Pfeil gekennzeichneten Bewegungsrichtung dar. Die durchgezogenen Linien geben Niveaus gleicher Intensität wieder. Durch eine Punkt-Strich-Linie ist für den in Figur 3 dargestellten Zeitpunkt die Front der lokalen Maxima bei einer Bewegung in Bewegungsrichtung gezeigt. Wenn die Front der lokalen Maxima einen Ortspunkt auf einer Auswertelinie (beispielsweise einen Schnittpunkt) durchläuft, so liegt zu diesem Zeitpunkt für diesen Ortspunkt der maximale Grauwert vor.

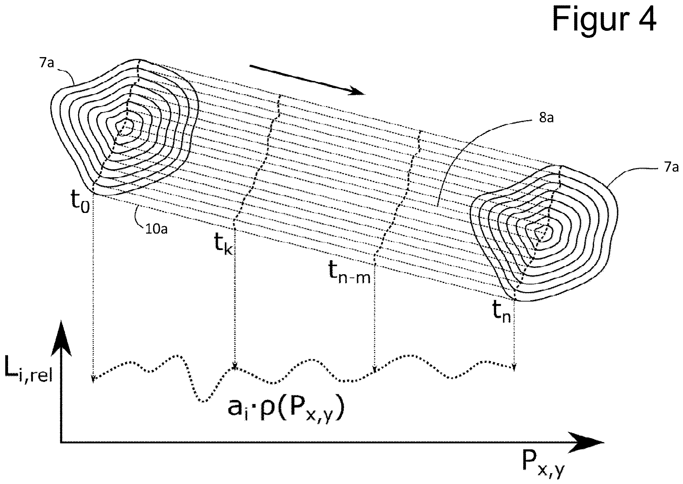

In der praktischen Anwendung wird ein derart homogenes Intensitätsprofil jedoch selten erreicht. Ein Vorteil der vorliegenden Erfindung ist, dass das Verfahren ebenso bei inhomogenen und unbekannten Intensitätsprofilen anwendbar ist. In den Figuren 1 und 4 sind die Messflecke 7a, 7b daher als unregelmäßige konzentrische Ringe dargestellt. Die Ringlinien symbolisieren jeweils ein Niveau gleichbleibender Intensität. Ebenso ist in den Figuren 2 und 4 jeweils durch eine gestrichelte Linie die Front der lokalen Maxima entlang der Bewegungsrichtung dargestellt. Aufgrund der inhomogenen Intensitätsverteilung stellt diese Front im Allgemeinen keine geradlinige Linie dar.

Entlang der Bewegungsrichtung hintereinanderliegende Punkte bilden den selben Schnitt der einstrahlenden Verteilung ab. Somit wird unter der Voraussetzung einer gleichbleibenden eintreffenden Strahlungsdichteverteilung des Messflecks bei den in dieser Linie liegenden Punkten dasselbe lokale Maximum der Strahlungsdichtefunktion reflektiert. Bei der ersten Bahnbewegung entspricht somit beispielsweise die maximale Intensität aller Schnittpunkte einer Auswertelinie der ersten Gruppe von Auswertelinien dem zugehörigen lokalen Maximum der Maximum-Front des ersten Messflecks 7a. Es ist somit entlang einer Auswertelinie zwar nicht die absolute Intensität bekannt, mit welcher die Punkte dieser Auswertelinie und insbesondere die Schnittpunkte auf dieser Auswertelinie beaufschlagt werden. Es ist jedoch bekannt, dass die maximale Intensität, mit welcher diese Punkte bei der ersten Bahnbewegung mit Messstrahlung beaufschlagt werden, unter der vorgenannten Voraussetzung gleich ist.

Dies gilt entsprechend für die zweite Bahnbewegung.

Sofern (in einem idealisierten Fall) die Messfläche entlang einer Auswertelinie eine konstante Reflektivität aufweist, ist entlang einer Auswertelinie somit eine konstante maximale reflektierte Intensität und entsprechend ein konstanter maximaler Grauwert bei Auswertung aller Bilder der zugehörigen Bildmenge für diesen Messpunkt zu erwarten. Aus den maximalen Grauwerten insbesondere der Schnittpunkte kann daher auch auf relative Reflexionsgrade bei örtlich inhomogener Reflektivität rückgeschlossen werden:
In Figur 4 ist schematisch ein Messergebnis für eine nicht ideale Messfläche mit örtlich inhomogenen Reflexionsgraden dargestellt: Der Messfleck 7a wird entlang der ersten Messfleck-Bahn 8a in der durch den Pfeil gekennzeichneten Richtung bewegt. Die Front der lokalen Maxima überstreicht den Punkt P_{x,y} zum Zeitpunkt tᵢ. Exemplarisch sind die Zeitpunkte t₀, tₖ, tₙ₋ₘ und tₙ eingezeichnet (für eine Bildmenge mit n+1 Bildern (i = 0,...,n)), jeweils mit zugehöriger, gestrichelt dargestellter Front der lokalen Maxima. Durch Pfeile ist die relative Intensität L_{i,rel} für diese Zeitpunkte referenziert.

Die Auswertelinien sind wie auch in Figur 2 gestrichelt dargestellt. Im unteren Bereich ist schematisch für jeden Punkt auf der Auswertelinie 10a der maximale Grauwert dargestellt, der für den jeweiligen Punkt aus der ersten Bildmenge ermittelt wird. Bei einem vollständig homogenen Absorber ist eine waagrechte Gerade zu erwarten. Im realistischen Fall eines inhomogenen Absorbers ist eine entsprechende Schwankung der maximalen Grauwerte zu erwarten, wie schematisch in Figur 4 im unteren Bereich dargestellt. Jedem Punkt P_{x,y} entlang der Auswertelinie 10a wird somit ein maximaler Grauwert gemäß der ersten Bildmenge zugeordnet, welcher einer reflektierten Lichtintensität entspricht. Das Verhältnis der maximalen Grauwerte zweier unterschiedlicher Punkte zueinander gibt somit das Verhältnis des Reflexionsgrades dieser beiden Punkte wider.

An einer Auswertelinie i entspricht die maximal reflektierte Strahlungsintensität bei Durchführen der ersten Bahnbewegung somit dem Produkt der maximalen Messstrahlintensität und dem Reflexionsgrad ρ(P_{x,y}) an diesem Punkt P_{x,y}. Die maximale Messstrahlintensität wiederum entspricht bis auf einen Proportionalitätsfaktor aᵢ dem maximalen Grauwert für diesen Punkt.

Entscheidend ist nun, dass für jeden Schnittpunkt eine Gleichung wie zuvor beschrieben aus der ersten Bahnbewegung sowie aus der zweiten Bahnbewegung aufgestellt werden kann. Der Reflexionsgrad an dem Schnittpunkt ist hierbei bei erster und zweiter Bahnbewegung gleich, da sich der Reflexionsgrad der beaufschlagten Fläche an dem Schnittpunkt nicht ändert. Die maximale Strahlungsintensität ist wiederrum wie zuvor beschrieben für alle Punkte die auf einer Auswertelinie liegen gleich. Die reflektierte maximale Intensität ergibt sich bis auf einen Proportionalitätsfaktor aus dem in der jeweiligen Bildmenge bestimmten maximalen Grauwert für diesen Punkt.

Es liegt somit bereits bei einem System von lediglich zwei Auswertelinien pro Gruppe und somit vier Schnittpunkten ein überbestimmtes Gleichungssystem vor, welches für jeden Schnittpunkt die Bestimmung des relativen Reflexionsgrades ermöglicht.

Aufgrund von Messfehlern oder Schwankungen in der Intensität oder Intensitätsverteilung des Messflecks während einer Bahnbewegung ist es vorteilhaft, die relativen Reflexionsgrade an den Schnittpunkten durch das überbestimmte Gleichungssystem mit an sich bekannten mathematischen Methoden beispielsweise durch Fehlerminimierung zu bestimmen.

Nach Durchführen des Verfahrens liegen somit zumindest für die Schnittpunkte die relativen Reflexionsgrade vor. In an sich bekannter weise kann eine Normierung zur Bestimmung der absoluten Reflexionsgrade erfolgen, im vorliegenden Fall beispielsweise durch Bestimmung einer Direktnormalstrahlung (DNI) und Normierung der maximalen Grauwerte mittels der DNI-Werte. Hierbei wird bevorzugt eine Änderung der DNI-Werte während einer Bahnbewegung berücksichtigt, so dass Fehler aufgrund von Intensitätsschwankungen während der Messung korrigiert werden.

Alternativ kann eine Normierung erfolgen, indem eine zuvor mit bekannten Mitteln im Labor vermessene Referenzprobe in der Messfläche angeordnet wird, auf welche der relative Reflexionsgrad bezogen wird.

Wie zuvor beschrieben, ermöglicht die Lösung des überbestimmten Gleichungssystems die Bestimmung der relativen Reflexionsgrade an den Schnittpunkten. Entlang einer Auswertelinie entspricht das Verhältnis der maximalen Grauwerte zweier unterschiedlicher Punkte jedoch wie ebenfalls zuvor beschrieben dem Verhältnis der relativen Reflexionsgrade. Mittels des vorliegenden Verfahrens können somit in einfacher Weise nicht nur die relativen Reflexionsgrade an den Schnittpunkten sondern entlang aller Bildpunkte, an welchen Messungen von Grauwerten erfolgten, entlang einer Auswertelinie angegeben werden.

### Bezugszeichenliste

- 1: Heliostaten
- 2: Strahlungsempfänger
- 3: Kamera
- 4: Auswerteeinheit
- 5: erste Bildmenge ortsaufgelöste Bilder
- 6: Messfläche
- 7a, 7b: Messfleck
- 8a: erste Messfleck-Bahn
- 8b: zweite Messfleck-Bahn
- 9: Überschneidungsfeld
- 10a, 10b: Auswertelinien

## Patentansprüche

1. Verfahren zur Bestimmung von relativen Reflexionsgraden einer Messfläche (6), mit den Verfahrensschritten
A. Beaufschlagen der Messfläche (6) mit Messstrahlung, so dass ein Messfleck (7a, 7b) auf der Messfläche (6) entsteht,
B. Bewegen des Messflecks entlang zumindest einer ersten geradlinigen Messfleck-Bahn (8a) über die Messfläche (6) gemäß einer ersten Bahnbewegung,
C. Aufnehmen einer ersten Bildmenge einer Mehrzahl von ortsaufgelösten Bildern der Messfläche (6) während der ersten Bahnbewegung gemäß Schritt B und
D. Bestimmen von relativen Reflexionsgraden für eine Mehrzahl von Ortspunkten der Messfläche (6),
wobei in Verfahrensschritt B der Messfleck (7a, 7b) zusätzlich zumindest entlang einer zweiten geradlinigen Messfleck-Bahn (8b), welche nicht parallel zu der ersten Messfleck-Bahn (8a) ist, in einer zweiten Bahnbewegung über die Messfläche (6) bewegt wird, derart, dass ein erster Messbahnbereich der Messfläche (6), welcher bei der ersten Bahnbewegung durch den Messfleck (7a, 7b) überstrichen wird mit einem zweiten Messbahnbereich der Messfläche (6), welcher bei der zweiten Bahnbewegung durch den Messfleck (7a, 7b) überstrichen wird, zumindest überlappt, und wobei in Verfahrensschritt C ein Aufnehmen einer zweiten Bildmenge einer Mehrzahl von ortsaufgelösten Bildern der Messfläche (6) während der zweiten Bahnbewegung gemäß Schritt B erfolgt, **dadurch gekennzeichnet, dass** in Verfahrensschritt D eine Auswertung an Schnittpunkten erfolgt, deren Ortspunkte auf der Messfläche (6) durch Auswertelinien (10a, 10b) definiert sind, wobei eine erste Gruppe von geradlinigen Auswertelinien innerhalb des ersten Messbahnbereichs und zumindest eine zweite Gruppe von geradlinigen Auswertelinien innerhalb des zweiten Messbahnbereichs vorgegeben und/oder bestimmt werden, wobei zumindest die erste Gruppe zumindest zwei Auswertelinien aufweist, die beabstandet zueinander sind, die Auswertlinien der ersten Gruppe parallel zu der ersten Messfleck-Bahn und die Auswertelinie oder die Auswertelinien der zweiten Gruppe parallel zu der zweiten Messfleck-Bahn ist und jede Auswertelinie der ersten Gruppe einen Schnittpunkt mit zumindest einer Auswertelinie der zweiten Gruppe aufweist,
wobei für jede Bildmenge jeweils zumindest für jeden Schnittpunkt ein maximaler Grauwert bestimmt wird und
dass in Verfahrensschritt D relative Reflexionsgrade der Messfläche (6) zumindest an einer Teilmenge der Schnittpunkte abhängig von diesen maximalen Grauwerten bestimmt werden.

2. Verfahren nach Anspruch 1,
**dadurch gekennzeichnet,**
**dass** die Orte der Schnittpunkte auf der Messfläche (6) vorgegeben werden.

3. Verfahren nach Anspruch 1,
**dadurch gekennzeichnet,**
**dass** der Verlauf zumindest einer Bahnbewegung, bevorzugt beider Bahnbewegungen aus den ortsaufgelösten Bildern bestimmt wird, insbesondere, dass der Verlauf der Auswertelinien relativ zu dem Verlauf der Bahnbewegung vorgegeben wird.

4. Verfahren nach einem der vorangegangenen Ansprüchen,
**dadurch gekennzeichnet,**
**dass** jede Gruppe von Auswertelinien (10a, 10b) zumindest 5, insbesondere zumindest 10, bevorzugt zumindest 50 Auswertelinien (10a, 10b) aufweist.

5. Verfahren nach einem der vorangegangenen Ansprüche,
**dadurch gekennzeichnet,**
**dass** die Bilder jeder Bildmenge jeweils von einem identischen Aufnahmeort aus aufgenommen werden, insbesondere, dass der Aufnahmeort der Bilder der ersten Bildmenge und der zweiten Bildmenge identisch ist.

6. Verfahren nach einem der vorangegangenen Ansprüche,
**dadurch gekennzeichnet,**
**dass** die Bilder der Bildmengen mittels einer Kamera (3) aufgenommen werden und vor Aufnahme der Bilder eine Bildsensorkalibrierung eines Bildsensors der Kamera (3) erfolgt, insbesondere eine Dunkelbildkorrektur und/oder eine Weißbildkorrektur.

7. Verfahren nach einem der vorangegangenen Ansprüche,
**dadurch gekennzeichnet,**
**dass** ein Reflektor als Quelle zum Beaufschlagen der Messfläche (6) mit Messstrahlung verwendet wird, insbesondere ein relativ zu der Messfläche (6) drehbarer, bevorzugt um mehrere Achsen drehbarer Reflektor.

8. Verfahren nach einem der vorangegangenen Ansprüche,
**dadurch gekennzeichnet,**
**dass** ein Profilstrahler als Quelle für die Messstrahlung verwendet wird.

9. Verfahren nach einem der vorangegangenen Ansprüche,
**dadurch gekennzeichnet,**
**dass** ein Laser als Quelle für die Messstrahlung verwendet wird, insbesondere, dass ein mittels des Lasers erzeugter Laserstrahl mittels eines optischen Aufweitungselementes aufgeweitet wird, insbesondere zu einem Linienprofil aufgeweitet wird.

10. Verfahren nach einem der vorangegangenen Ansprüche,
**dadurch gekennzeichnet,**
**dass** eine Lichtquelle zum Erzeugen der Messstrahlung relativ zu der Messfläche (6) bewegt wird.

11. Verfahren nach einem der vorangegangenen Ansprüche,
**dadurch gekennzeichnet,**
**dass** die Verfahrensschritte A bis D für zumindest zwei unterschiedliche Aufnahmeorte durchgeführt werden, und in einer Gesamtauswertung winkelabhängige relative Reflexionsgrade für zumindest eine Teilmenge der Schnittpunkte erfolgt.

12. Verfahren nach einem der vorangegangenen Ansprüche,
**dadurch gekennzeichnet,**
**dass** mittels des Verfahrens relative Reflexionsgrade einer Absorberfläche eines Solarturms, insbesondere eines mittels Heliostaten mit Strahlung beaufschlagten Solarturms bestimmt werden.

## Claims

1. Method for determining relative reflectances of a measurement surface (6), having the method steps of
A. applying measuring radiation to the measurement surface (6) so that a measurement spot (7a, 7b) is formed on the measurement surface (6),
B. moving the measurement spot over the measurement surface (6) in accordance with a first path movement along at least one first rectilinear measurement spot path (8a),
C. recording a first image set of a plurality of spatially resolved images of the measurement surface (6) during the first path movement in accordance with step B and
D. determining relative reflectances for a plurality of location points of the measurement surface (6),
wherein,
in method step B, the measurement spot (7a, 7b) is additionally moved over the measurement surface (6) in a second path movement at least along a second rectilinear measurement spot path (8b), which is not parallel to the first measurement spot path (8a), in such a way that a first measurement path region of the measurement surface (6) over which the measurement spot (7a, 7b) passes during the first path movement at least overlaps with a second measurement path region of the measurement surface (6) over which the measurement spot (7a, 7b) passes during the second path movement, and wherein,
in method step C, a second image set of a plurality of spatially resolved images of the measurement surface (6) is recorded during the second path movement in accordance with step B,
**characterised in that**, in method step D, an evaluation is carried out at points of intersection, the location points of which on the measurement surface (6) are defined by evaluation lines (10a, 10b), a first group of rectilinear evaluation lines within the first measurement path region and at least one second group of rectilinear evaluation lines within the second measurement path region being specified and/or determined, wherein at least the first group has at least two evaluation lines which are spaced apart from one another, the evaluation lines of the first group are parallel to the first measurement spot path and the evaluation line or evaluation lines of the second group is/are parallel to the second measurement spot path, and each evaluation line of the first group has a point of intersection with at least one evaluation line of the second group, wherein, for each image set, a maximum greyscale value is determined at least for each point of intersection and,
in method step D, relative reflectances of the measurement surface (6) at least at a sub-set of the points of intersection are determined in dependence upon those maximum greyscale values.

2. Method according to claim 1,
**characterised in that**
the locations of the points of intersection on the measurement surface (6) are specified.

3. Method according to claim 1,
**characterised in that**
the course of at least one path movement, preferably of both path movements, is determined from the spatially resolved images; especially, the course of the evaluation lines relative to the course of the path movement is specified.

4. Method according to any one of the preceding claims, **characterised in that**
each group of evaluation lines (10a, 10b) has at least five, especially at least ten, most preferably at least fifty evaluation lines (10a, 10b).

5. Method according to any one of the preceding claims, **characterised in that**
the images of each image set are each recorded from an identical recording location; especially, the recording locations of the images of the first image set and of the second image set are identical.

6. Method according to any one of the preceding claims, **characterised in that**
the images of the image sets are recorded by means of a camera (3) and, before the images are recorded, an image sensor calibration of an image sensor of the camera (3) is carried out, especially a dark image correction and/or a white image correction.

7. Method according to any one of the preceding claims, **characterised in that**
a reflector is used as source for applying measuring radiation to the measurement surface (6), especially a reflector that is rotatable relative to the measurement surface (6), preferably rotatable about a plurality of axes.

8. Method according to any one of the preceding claims, **characterised in that**
a profile emitter is used as source for the measuring radiation.

9. Method according to any one of the preceding claims, **characterised in that**
a laser is used as source for the measuring radiation; especially, a laser beam generated by means of a laser is expanded by means of an optical expander element, especially expanded to form a linear profile.

10. Method according to any one of the preceding claims, **characterised in that**
a light source for generating the measuring radiation is moved relative to the measurement surface (6).

11. Method according to any one of the preceding claims, **characterised in that**
method steps A to D are carried out for at least two different recording locations and, in an overall evaluation, angle-dependent relative reflectances are determined for at least one sub-set of the points of intersection.

12. Method according to any one of the preceding claims, **characterised in that**
the method is used to determine relative reflectances of an absorber surface of a solar tower, especially of a solar tower acted upon by radiation by means of heliostats.

## Revendications

1. Procédé de détermination de degrés relatifs de réflexion d'une surface de mesure (6), comprenant les étapes opératoires consistant à
A. soumettre la surface de mesure (6) à un rayonnement de mesure, de telle sorte qu'un point de mesure (7a, 7b) soit engendré sur ladite surface de mesure (6),
B. mouvoir ledit point de mesure le long d'au moins une première trajectoire rectiligne (8a) au-dessus de la surface de mesure (6), en conformité avec un premier mouvement de cheminement,
C. enregistrer au cours dudit premier mouvement de cheminement, conformément à l'étape B, un premier lot d'une pluralité d'images spatialement résolues de la surface de mesure (6), et
D. déterminer des degrés relatifs de réflexion pour une pluralité de points de localisation de la surface de mesure (6),
sachant qu'à l'étape opératoire B, le point de mesure (7a, 7b) est additionnellement animé d'un second mouvement de cheminement au-dessus de la surface de mesure (6), au moins le long d'une seconde trajectoire rectiligne (8b) non parallèle à la première trajectoire (8a) dudit point de mesure, de façon telle qu'une première plage de trajectoires de mesure de ladite surface de mesure (6), balayée par ledit point de mesure (7a, 7b) au cours du premier mouvement de cheminement, chevauche au moins une seconde plage de trajectoires de mesure de ladite surface de mesure (6), balayée par ledit point de mesure (7a, 7b) au cours dudit second mouvement de cheminement,
et sachant qu'à l'étape opératoire C, un enregistrement d'un second lot d'une pluralité d'images spatialement résolues de la surface de mesure (6) s'opère au cours du second mouvement de cheminement, conformément à l'étape B,
**caractérisé par le fait**
**que**, durant l'étape opératoire D, une évaluation s'opère en des points d'intersection dont les points de localisation sont définis par des lignes d'évaluation (10a, 10b), sur la surface de mesure (6), un premier groupe de lignes droites d'évaluation à l'intérieur de la première plage de trajectoires de mesure, et au moins un second groupe de lignes droites d'évaluation à l'intérieur de la seconde plage de trajectoires de mesure, étant préétablis et/ou déterminés, sachant qu'au moins le premier groupe compte au moins deux lignes d'évaluation distantes l'une de l'autre, que les lignes d'évaluation du premier groupe sont parallèles à la première trajectoire du point de mesure, que la ligne d'évaluation ou les lignes d'évaluation du second groupe est (sont) parallèle(s) à la seconde trajectoire dudit point de mesure, et que chaque ligne d'évaluation dudit premier groupe présente un point d'intersection avec au moins une ligne d'évaluation dudit second groupe,
au moins une valeur maximale de gris étant respectivement déterminée pour chaque lot d'images, au moins pour chaque point d'intersection ; et
par le fait que, durant ladite étape opératoire D, des degrés relatifs de réflexion de la surface de mesure (6) sont déterminés en fonction de ces valeurs maximales de gris, au moins à raison d'un lot partiel desdits points d'intersection.

2. Procédé selon la revendication 1,
**caractérisé par le fait**
**que** les sites des points d'intersection sont préétablis sur la surface de mesure (6).

3. Procédé selon la revendication 1,
**caractérisé par le fait**
**que** l'allure d'au moins un mouvement de cheminement, préférentiellement des deux mouvements de cheminement, est déterminée à partir des images spatialement résolues ; notamment par le fait que le tracé des lignes d'évaluation est préétabli par rapport à l'allure du mouvement de cheminement.

4. Procédé selon l'une des revendications précédentes,
**caractérisé par le fait**
**que** chaque groupe de lignes d'évaluation (10a, 10b) compte au moins 5, en particulier au moins 10, de préférence au moins 50 lignes d'évaluation (10a, 10b).

5. Procédé selon l'une des revendications précédentes,
**caractérisé par le fait**
**que** les images de chaque lot d'images sont enregistrées, à chaque fois, à partir d'un site d'enregistrement identique ; notamment par le fait que le site d'enregistrement des images du premier lot d'images et du second lot d'images est identique.

6. Procédé selon l'une des revendications précédentes,
**caractérisé par le fait**
**que** les images des lots d'images sont enregistrées au moyen d'une caméra (3) et un calibrage d'un capteur d'images de ladite caméra (3), en particulier une correction d'images sombres et/ou une correction d'images blanches, s'opère(nt) préalablement à l'enregistrement desdites images.

7. Procédé selon l'une des revendications précédentes,
**caractérisé par le fait**
**qu'**un réflecteur, notamment un réflecteur rotatif par rapport à la surface de mesure (6), préférentiellement apte à tourner autour de plusieurs axes, est utilisé en tant que source conçue pour soumettre ladite surface de mesure (6) à un rayonnement de mesure.

8. Procédé selon l'une des revendications précédentes,
**caractérisé par le fait**
**qu'**un émetteur profilé est utilisé en tant que source dévolue au rayonnement de mesure.

9. Procédé selon l'une des revendications précédentes,
**caractérisé par le fait**
**qu'**un laser est utilisé en tant que source dévolue au rayonnement de mesure ; notamment par le fait qu'un faisceau laser, engendré au moyen dudit laser, est élargi au moyen d'un élément d'élargissement optique, en particulier élargi en un profil de ligne.

10. Procédé selon l'une des revendications précédentes,
**caractérisé par le fait**
**qu'**une source lumineuse, conçue pour engendrer le rayonnement de mesure, est mise en mouvement par rapport à la surface de mesure (6).

11. Procédé selon l'une des revendications précédentes,
**caractérisé par le fait**
**que** les étapes opératoires A à D sont exécutées pour au moins deux sites d'enregistrement différents et des degrés relatifs de réflexion à dépendance angulaire sont déterminés, en une évaluation globale, pour au moins un lot partiel des points d'intersection.

12. Procédé selon l'une des revendications précédentes,
**caractérisé par le fait**
**que** des degrés relatifs de réflexion d'une surface d'absorption d'une tour solaire, en particulier d'une tour solaire soumise à rayonnement au moyen d'héliostats, sont déterminés au moyen dudit procédé.
